(19) Europäisches Patentamt / European Patent Office / Office européen des brevets

(11) **EP 3 705 758 B1**

(12) **EUROPEAN PATENT SPECIFICATION**

(45) Date of publication and mention
of the grant of the patent:
**03.12.2025 Bulletin 2025/49**

(51) International Patent Classification (IPC):
**F16J 15/10** (2006.01)   **C01B 33/38** (2006.01)
**F16J 15/12** (2006.01)

(21) Application number: **18872407.4**

(22) Date of filing: **26.10.2018**

(52) Cooperative Patent Classification (CPC):
**F16J 15/102; C01B 33/38; F16J 15/104;
F16J 15/108; F16J 15/125**

(86) International application number:
**PCT/JP2018/039875**

(87) International publication number:
**WO 2019/087959 (09.05.2019 Gazette 2019/19)**

(54) **SEALING MATERIAL**

DICHTUNGSMATERIAL

MATÉRIAU DE SCELLEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **31.10.2017   JP 2017211081**

(43) Date of publication of application:
**09.09.2020   Bulletin 2020/37**

(73) Proprietor: **Nichias Corporation
Tokyo 104-8555 (JP)**

(72) Inventors:
• **ITOI, Katsutoyo
Tokyo 104-8555 (JP)**
• **YAMANAKA, Makoto
Tokyo 104-8555 (JP)**

(74) Representative: **Pestalozzi, Deborah
Isler & Pedrazzini AG
Giesshübelstrasse 45
Postfach
8027 Zürich (CH)**

(56) References cited:
WO-A1-2016/125486      WO-A1-2016/125486
GB-A- 2 166 127      GB-A- 2 172 883
JP-A- 2000 319 013      JP-A- 2010 255 661
JP-A- 2011 230 504      JP-A- 2012 193 750
JP-A- 2013 047 310      JP-A- 2013 047 310
JP-A- 2013 052 680      JP-A- 2017 011 130
US-A- 4 707 298      US-A- 4 877 484
US-A1- 2002 058 140

**Description**

Technical Field

The present invention relates to a sealing material such as a gasket or a packing.

Background Art

Sealing materials such as gaskets and packings are used for piping flanges and the like in various industries. As a gasket, a sheet gasket, a spiral gasket, a sawtooth gasket, and the like are known.

A spiral gasket is obtained by winding a hoop material and a filler material in a stacked state. In a sawtooth gasket, generally, a number of concentric circular grooves having different diameters are formed on both surfaces of a metal main body at almost equal pitches in the radial direction, and the cross section has a sawtooth shape.

Patent Document 1 discloses a spiral gasket in which expanded graphite is used as a filler material. A sealing material formed of expanded graphite has sufficient elasticity and is excellent in heat resistance. However, as for expanded graphite, in a temperature range exceeding 500°C in the presence of oxygen, disappearance of expanded graphite by oxidation is promoted. Therefore, it was difficult to maintain stable sealing property for a long period of time. Patent Document 2 discloses a spiral gasket in which unexfoliated mica and expanded graphite are used as a filler material. However, in this spiral gasket, expanded graphite disappears when used at high temperatures, and hence, sealing property cannot be maintained. Patent Document 3 discloses a spiral gasket in which unexfoliated mica is used as a filler material. Only a sheet having a high density could be obtained, and this gasket was poor in sealing property. Patent Document 4 discloses a gasket in which an exfoliated-layered clay mineral having a high sealing property is used.

Patent Document 5 discloses that the interlayer ion of swelling fluorine mica is exchanged with another cation to increase the mechanical strength of the sheet obtained from thus modified synthetic fluorine mica.

Patent Document 6 discloses a sealing material, according to the preamble of claim 1, comprising layers of swelling clay mineral, with exchangeable interlayer cations such as $Na^+$, $Ca^{2+}$, $Mg^{2+}$. These interlayer cations are substituted by $Li+$ ions and then subjected to a heat treatment at 230°C-800°C in order to achieve water resistance.

Patent Document 7 discloses a method of synthesis of intercalated layered materials by contacting layered silicate materials such as smectite clays. Therein, multiply charged onium ions can be exchanged by $Na^+$ ions.

Patent Document 8 discloses sheet materials produced from water-swellable inorganic materials. Therein, an interstitial ion is exchanged by a multiamine derived cation, such as a diamine derived cation.

Similarly, patent Document 9 discloses water resistant articles made from flocced 2:1 layered silicates, wherein an interstitial ion is exchanged by a cationic diamine.

Patent Document 10 discloses in synthetic fluorinated hectorite or mica the exchange of excess fluorine ions by ammonium or hydrogen ions using a cation exchange resin.

Patent Document 11 discloses the exchange of exchangeable interstitial ions with at least one cation containing an aminomethyleneimine group.

Patent Document 12 discloses the production of water-resistant articles made from flocced mineral materials, wherein an exchangeable interstitial ion is replaced by an exchange cation having the formula $(R_1C(R_2)R_3)+$, wherein $R_1$, $R_2$, and $R_3$ each are $NH_2$ or $CH_3$, wherein at least two are $NH_2$.and wherein one or more of the hydrogen atoms of $R_1$, $R_2$ and $R_3$ may instead be a substituent selected from: a $C_1$ to a $C_5$ alkyl, a $C_2$ to $C_5$ alkenyl, and a $C_2$ to $C_5$ alkynyl.

Patent Document 13 discloses an expansible clay mineral having a high affinity for metal ions, suggesting a replacement of potassium cations by lithium cations or sodium cations.

Related Art Document

Patent Document

[Patent Document 1] JP 3163562 B2
[Patent Document 2] JP 3310619 B2
[Patent Document 3] JP 5047490 B2
[Patent Document 4] WO 2016/125486 A1
[Patent Document 5] JP H05-262514 A
[Patent Document 6] JP 2010 255661 A
[Patent Document 7] JP 2000 319013 A
[Patent Document 8] GB 2 172 883 A

[Patent Document 9] US 4 877 484 A
[Patent Document 10] JP 2011 230504 A
[Patent Document 11] GB 2 166 127 A
[Patent Document 12] US 4 707 298 A
[Patent Document 13] US 2002/058140 A1

Summary of the Invention

The sealing material of Patent Document 4 has low water resistance and cannot be used for a fluid such as water.

It is an object of the present invention to provide a sealing material having excellent water resistance.

The present inventors have found that a sealing material having excellent water resistance can be obtained by using layered clay minerals in which Na ion between layers of the layered clay minerals is exchanged with K ion or the like, and have completed the present invention.

According to the present invention, a sealing material having excellent water resistance can be provided.

Brief Description of the Drawings

FIG. 1 is a schematic cross-sectional view of a spiral gasket according to a first embodiment of the present invention.
FIG. 2 is a schematic cross-sectional view of a sawtooth gasket according to the second embodiment of the present invention.
FIG. 3 is a schematic cross-sectional view of a spiral gasket according to the third embodiment of the present invention.

Mode for Carrying out the Invention

The sheet used in the sealing material of the present invention comprises an aggregate of layered clay minerals.

As the layered clay minerals used in the present invention, for example, layered clay minerals, in which an element ion exhibiting non-swelling property (generally, cations other than $Li^+$ and $Na^+$ exhibit non-swelling property) and organic cation are present in at least partially between the layers, can be used. Examples of the organic cation include ammonium ions (primary to quaternary ammonium ions). Preferably, a layered clay mineral can be used in which at least one or more selected from $K^+$, $Ba^{2+}$ and $Pb^{2+}$, more preferably $K^+$, are present in at least partially between the layers.

The clay mineral may be a natural clay mineral or a synthetic clay mineral, and its examples include mica, vermiculite, montmorillonite, iron montmorillonite, beidellite, saponite, hectorite, stevensite, and nontronite.

Specifically, as the layered clay minerals, fluorine mica represented by the following formula can be used.

$$\alpha MF \cdot \beta LF \cdot \gamma(aMgF_2 \cdot bMgO) \cdot \delta SiO_2,$$

wherein in the formula, M is an interlayer ion and represents one or more selected from $K^+$, $Ba^{2+}$ and $Pb^{2+}$,
L is an interlayer ion and represents $Na^+$ or $Li^+$,
$\alpha$ and $\beta$ are $0<\alpha\leqq2$, $0\leqq\beta<2$,
$\alpha+\beta$ is 0.1 to 2,
$\gamma$ represents 2 to 3.5,
$\delta$ represents 3 to 4, and
a and b represent 0 to 1, respectively, and a+b=1.

As the layered clay mineral used in the present invention, for example, a modified layered clay mineral, in which at least a portion of a first cation which is an interlayer ion of a swellable layered clay mineral is ion-exchanged with a second cation, can be used. Ion exchange of a swellable layered clay mineral reduces swellability. The exchange rate depends on the type of an ion, and is usually 20% or more. That is, 20% or more of the interlayer ions are the second cations.

Fluorine mica of the above formula can be exemplified as the modified layered clay mineral. In this case, the first ion is L and the second ion is M.

In the present invention, the water resistance of the obtained sheet is improved by using the modified layered clay mineral. The sheet of the present invention preferably has a water resistance capable of maintaining the shape of the sheet in the water resistance test measured by the method described in the Examples.

As the layered clay minerals, an exfoliated body from which the clay minerals are exfoliated can be used. This exfoliated body may be a single layer, and is usually an exfoliated body in which a plurality of layers is laminated. Such layered clay minerals (exfoliated bodies) are usually flaky and have a thickness of 0.5 nm to 1000 nm. For example, the thickness may be between 1 nm and 800 nm, between 3 nm and 500 nm, between 5 nm and 100 nm, or between 10 nm and 50 nm. The thinner the thickness is, the better the sealing property is. Thickness can be measured by the methods described in the Examples.

The exfoliated degree of the exfoliated body strongly correlates with the thickness of the layered body or the bulk density of the layered body, and the smaller the bulk density is, the thinner the peeled laminate exfoliated layered body is.

The density of the sheet of the present invention is preferably 0.5 to 2.5 $g/cm^3$, more preferably 1.0 to 2.0 $g/cm^3$, and still more preferably 1.2 to 1.8 $g/cm^3$. The sheet having a density exceeding 1.6 $g/cm^3$ can be used in the present invention.

The sheet of the present invention preferably has a porosity of 40% or less, more preferably 35% or less, still more preferably 30% or less, and particularly preferably 25% or less, when compressed at a surface pressure of 34 MPa. The lower limit is not restricted, but is normally 1% or more. When the porosity is small, the sealing property is improved. The porosity can be adjusted by the thickness or the like of one piece of the layered clay mineral. The porosity can be measured by the method described in the Examples.

The sealing property of the sheet at the normal temperature is preferably 70 mL/min or less, more preferably 50 mL/min or less, still more preferably 30 mL/min or less, and particularly preferably 20 mL/min or less, as measured by the method described in the Examples.

The sheet may contain binders and the like in addition to the layered clay minerals, provided that the advantageous effects of the present invention are not impaired. The sheet can be composed of 90% or more by weight, 95% or more by weight, 98% or more by weight, or 100% by weight of layered clay minerals. Further, the sheet can be composed of 90% or more by weight, 95% or more by weight, 98% or more by weight, or 100% by weight of layered clay minerals and binders.

As the binder, rubbers, adhesives or the like can be exemplified. The preferred binder includes an acrylonitrile butadiene rubber, a styrene butadiene rubber, a polybutadiene rubber, a silicone rubber, an acrylic rubber, a natural rubber, a butyl rubber, a chloroprene rubber, an ethylene propylene rubber, a fluororubber, a urethane rubber, an acrylic adhesive or a silicone adhesive. The binder is preferably an acrylonitrile butadiene rubber or a silicone rubber. By including the binder, the obtained sheet can be provided with flexibility.

The amount of binder is preferably from 0.3 to 20% by weight of the sheet. If it is less than 0.3% by weight, the flexibility may become insufficient, and if it is more than 20% by weight, the characteristics such as the sealing property may be impaired. The amount of binder is more preferably 0.5 to 15% by weight, more preferably 1 to 10% by weight.

A sheet of the modified layered clay mineral can be produced, for example, by the following method.

The swellable layered clay mineral is placed in an aqueous solution containing a cation (a hydroxide solution, a chloride solution, etc.) and stirred. The swellable layer clay mineral is swelled. The cation between the layers is exchanged with the cation of the aqueous solution. The modified layered clay mineral is dehydrated and put into a mold, and compression molding is performed to an arbitrary thickness to obtain a sheet having an arbitrary density and size.

When an ion exchange is performed, a first cation may be exchanged first, and then at least a portion of the first cation may be exchanged with a second cation.

The thickness of the resulting sheet is usually about 0.1 to 10 mm.

The sheet can be used for sealing materials of various types of piping such as exhaust pipes of various industries and automobiles, for example, gaskets, packings, and the like. The sheet can be used as the sealing material itself or as a portion of the sealing material.

Next, an embodiment in which the sealing material of the present invention is a gasket will be described.

One aspect of the gasket of the present invention is that one or both sides of the gasket body is covered with sheets of layered clay minerals.

Examples of the gasket include a spiral gasket provided with a spiral gasket main body obtained by winding a hoop material and a filler material spirally in a stacked state, a sawtooth gasket provided with a sawtooth gasket main body in which grooves having a sawtooth-shaped cross section are formed on one surface or both surfaces of the main body, and the like.

Another aspect of the gasket of the present invention is that a sheet containing layered clay minerals is used as a filler material in a spiral gasket main body in which a hoop material and a filler material are spirally wound in a stacked state.

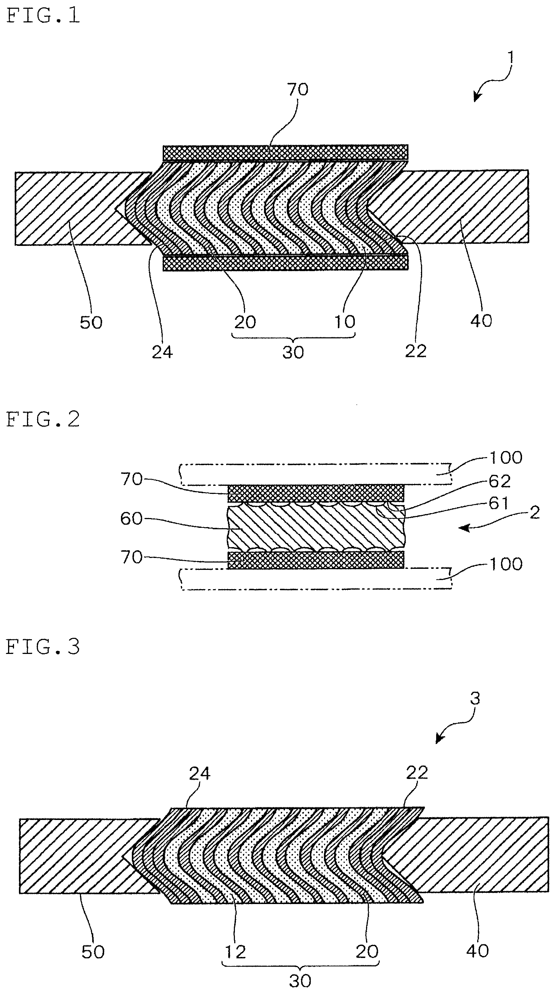

FIG. 1 is a schematic cross-sectional view of a spiral gasket according to the first embodiment of the present invention. As shown in FIG. 1, a spiral gasket 1 has a structure in which a spiral gasket main body 30 is held between an outer ring 50 and an inner ring 40, and in which the spiral gasket main body 30 is formed by spirally winding a hoop material 20 and a filler material 10 in a stacked state. The spiral gasket main body 30 has a sheet 70 of layered clay minerals laminated on both sides of its annular surface (its exposed surface). Preferably, the inner circumferential wound hoop portion 22 in which only the hoop material 20 is wound is formed on the inner circumference of the gasket main body portion 30. In addition, preferably, an outer circumferential wound hoop portion 24 in which only the hoop material 20 is wound is formed on the outer circumference of the gasket main body portion 30.

The spiral gasket according to this embodiment may be provided with the inner ring 40 and the outer ring 50 as shown in FIG. 1, and may be provided with only the outer ring 50 or only the inner ring 40. The sheet 70 covers both annular surfaces of the gasket body 30, and may cover only one surface. Further, in FIG. 1, the sheet 70 covers the entire annular surface of the gasket body 30, and may cover a portion of the gasket body 30.

In the spiral gasket 1, since the surface of the gasket main body 30 is covered with the sheet 70, it is possible to improve the familiarity with the joints (flanges) and the like of various pipes, reduce leakage from the contact surface, and prevent burnout of the filler material, thereby improving the sealing property of the gasket itself.

The covering method for covering the surface of the gasket main body with a sheet is not particularly limited, and can be carried out by using an adhesive such as glue, for example. Instead of using the adhesion, placing the sheet formed of flaky clay minerals on the exposed surface may suffice.

FIG. 2 is a schematic cross-sectional view of a sawtooth gasket 2 according to the second embodiment of the present invention installed on flanges 100.

As shown in FIG. 2, the sawtooth gasket 2 has sheet 70 layered on both sides of its annular surface of the sawtooth gasket main body 60. In the sawtooth gasket main body 60, plural concentric grooves 61 differing in diameter are formed. That is, as shown in FIG. 2, grooves 61 are formed between adjacent teeth 62.

The sawtooth gasket 2 is tightened so that the sheet 70 flows into the groove portion formed between the sawteeth and demonstrates excellent sealing property even at low surface pressure. Further, since the sheet is adhered onto the surface, the familiarity with the flange surface is excellent. In addition, the front end of the sawtooth does not directly contact the flange, and the flange surface is not damaged.

As in the case of the spiral gasket, an outer ring and/or an inner ring (not shown) may be attached to the sawtooth gasket 2.

FIG. 3 is a schematic cross-sectional view of a spiral gasket according to the third embodiment of the present invention.

The spiral gasket of the embodiment differs from the spiral gasket of FIG. 1 in that the filler material comprises a layered clay mineral and in that the filler material does not need to be covered with sheets. The same members as those of the first embodiment are denoted by the same reference numerals, and descriptions thereof are omitted.

The filler material 12 used in the spiral gasket 3 is a tape-like or a plurality of strip-like sheets containing a layered clay mineral. This sheet is the same as sheet 70 of the first embodiment, but is typically 0.05 to 1.0 mm thick because it is used as a filler material.

Examples

Example 1

As clays, 10 g of swellable mica "DMA-350" (manufactured by TOPY INDUSTRIES, LIMITED) which is sodium-tetrasilicon mica was added to 90 g of distilled water and stirred with a glass rod. Next, 500 mL of 5 N potassium hydroxide was added thereto and stirred to obtain a uniform clay-dispersed liquid. The resulting clay-dispersed liquid was frozen by using liquid nitrogen. The ice was frozen-dried by using a freeze dryer "FDU-2110" (manufactured by Tokyo Rika Kiki Co., Ltd.), to obtain an exfoliated body of mica. 2.5 g of the exfoliated body of mica was put into a mold (having a diameter of 65 mm and having a cylindrical depression), and compression molded using a cylindrical rod to obtain a 0.4 mm sheet.

The obtained sheet was subjected to the following evaluation. The results are shown in Table 1.

(1) Water resistance

The sheet was immersed in 80°C water for 24 hours. Whether the sheet shape was maintained after immersion was visually judged.

When the shape was maintained, it was evaluated as "o," and when the shape was not maintained, it was evaluated as "×."

(2) Thickness of the layered clay mineral

Determined by Williamson-Hall method.

(3) Porosity

A 30 mm diameter sample was punched out of the sheet and weighed. Next, the punched out sample was compressed at a surface pressure of 34 MPa, and the thickness at that time was measured, and the volume at the time of compression was obtained from the sample size. The density at the time of compression was calculated from the weight of the sample and the volume at the time of compression.

The true densities of the sheets were measured according to JISR1620.

The porosity was calculated from the density at the time of compression and the true density by the following equation.

$$\text{Porosity (\%)} = 100 - \text{Density at compression/True density} \times 100$$

(4) Sealability (normal temperature)

The flanges were measured in the same manner as in Evaluation Example 2 of Patent Document 4, except that the flanges were changed to JIS10K20ARF and the clamping surface pressure was changed to 34 MPa.

(5) Sealability (high temperature)

The measurement was performed in the same manner as in Evaluation Example 2 of Patent Document 4 except that the heating cycle condition was changed to 650°C×10 hours of heating.

(6) Ion-exchange property

Interlayer ions of mica were examined by X-ray fluorescence. As a result, about 30% of $Na^+$ of interlayer ions of mica was exchanged into $K^+$.

Example 2

As clays, 2 g of swellable mica "DMA-350" was added to 98 g of distilled water and stirred with a glass rod. Next, 500 mL of 5 N potassium hydroxide and 0.2 g of latex "NipolLX513" (rubber content: 45%) (Zeon Corporation) were added to obtain uniform dispersions. Thereafter, a sheet was produced and evaluated in the same manner as in Example 1.

Example 3

As clays, 5 g of swellable mica "DMA-350" was added to 95 g of distilled water and stirred with a glass rod. Next, 500 mL of 5 N potassium hydroxide and 0.5 g of latex "NipolLX513" were added to obtain uniform dispersions. Thereafter, a sheet was produced and evaluated in the same manner as in Example 1.

Example 4

As a clay, 10 g of swellable mica "DMA-350" was added to 90 g of distilled water and stirred with a glass rod. Next, 500 mL of 5 N potassium hydroxide and 1.0 g of latex "NipolLX513" were added to obtain uniform dispersions. Thereafter, a sheet was produced and evaluated in the same manner as in Example 1.

Example 5

As a clay, 20 g of swellable mica "DMA-350" was added to 80 g of distilled water and stirred with a glass rod. Next, 500 mL of 5 N potassium hydroxide and 2.2 g of latex "NipolLX513" were added to obtain uniform dispersions. Thereafter, a sheet was produced and evaluated in the same manner as in Example 1.

Example 6

As a clay, 30 g of swellable mica "DMA-350" was added to 70 g of distilled water and stirred with a glass rod. Next, 500 mL of 5 N potassium hydroxide and 3.8 g of latex "NipolLX513" were added to obtain uniform dispersions. Thereafter, a sheet was produced and evaluated in the same manner as in Example 1.

Example 7

As a clay, 40 g of swellable mica "DMA-350" was added to 60 g of distilled water and stirred with a glass rod. Next, 500 mL of 5 N potassium hydroxide and 3.8 g of latex "NipolLX513" were added to obtain uniform dispersions. Thereafter, a

EP 3 705 758 B1

sheet was produced and evaluated in the same manner as in Example 1.

Example 8

As clays, 50 g of swellable mica "DMA-350" was added to 50 g of distilled water and stirred with a glass rod. Next, 500 mL of 5 N potassium hydroxide and 3.8 g of latex "NipolLX513" were added to obtain uniform dispersions. Thereafter, a sheet was produced and evaluated in the same manner as in Example 1.

Example 9

As a clay, 10 g of swellable mica "DMA-350" was added to 90 g of distilled water and stirred with a glass rod. Next, 500 mL of 5 N potassium hydroxide and 1.2 g of latex "NipolLX513" were added to obtain uniform dispersions. Thereafter, a sheet was produced and evaluated in the same manner as in Example 1.

Example 10

As a clay, 10 g of swellable mica "DMA-350" was added to 90 g of distilled water and stirred with a glass rod. Next, 500 mL of 5 N potassium hydroxide and 2.0 g of latex "NipolLX513" were added to prepare obtain uniform dispersions. Thereafter, a sheet was produced and evaluated in the same manner as in Example 1.

Example 11

As a clay, 10 g of swellable mica "DMA-350" was added to 90 g of distilled water and stirred with a glass rod. Next, 500 mL of 5 N potassium hydroxide and 2.5 g of latex "NipolLX513" were added to obtain uniform dispersions. Thereafter, a sheet was produced and evaluated in the same manner as in Example 1.

Comparative Example 1

As clays, 50 g of gold mica "SUZORITEMICA200S" (non-swellable mica) (Imerys Performance Minerals North America) was added to 50 g of distilled water and stirred with a glass rod. Next, 1.0 g of latex "NipolLX513" was added to obtain uniform dispersions. Thereafter, a sheet was produced and evaluated in the same manner as in Example 1.

Comparative Example 2

As a clay, 10 g of swellable mica "DMA-350" was added to 90 g of distilled water and stirred with a glass rod. Next, latex 1.0 g of latex "NipolLX513" was added to obtain uniform dispersions. Thereafter, a sheet was produced and evaluated in the same manner as in Example 1.

Table 1

| | | Examples | | | | | | | | | | | Comparative Examples | |
|---|---|---|---|---|---|---|---|---|---|---|---|---|---|---|
| | | 1 | 2 | 3 | 4 | 5 | 6 | 7 | 8 | 9 | 10 | 11 | 1 | 2 |
| Thickness of flaky clay minerals (nm) | | 21 | 16 | 17 | 21 | 23 | 26 | 41 | 86 | 21 | 21 | 21 | 1000 | 26 |
| Amount of binder (wt%) | | 0 | 4 | 4 | 4 | 4 | 4 | 4 | 4 | 5 | 8 | 10 | 4 | 4 |
| Water resistance | | ○ | ○ | ○ | ○ | ○ | ○ | ○ | ○ | ○ | ○ | ○ | ○ | × |
| Density (g/cm3) | | 1.7 | 1.7 | 1.7 | 1.7 | 1.7 | 1.7 | 1.6 | 1.6 | 1.7 | 1.7 | 1.8 | 1.6 | 1.7 |
| Porosity (at a surface pressure of 34 MPa) | | 5 | 3 | 4 | 5 | 6 | 10 | 17 | 28 | 5 | 6 | 6 | | 10 |
| Sealability (ml/min) | Normal Temperature | 0.1 | 0.0 | 0.0 | 0.1 | 0.2 | 0.6 | 2 | 7 | 0.0 | 0.0 | 0.0 | >100 | 0.5 |
| | High Temperature (650°C) | 0.1 | 0 | 0 | 0.1 | 0.2 | 0.7 | 2 | 8 | 0.1 | 0.2 | 1 | - | 0.8 |

7

Industrial Applicability

The sealing material of the present invention can be used for sealing a fluid such as water, oil, steam, gas or the like in equipment in a high-temperature and high-pressure state, a joint portion of various pipes or the like in a petroleum refinery, a petrochemical plant, an LNG plant, a power plant, an iron mill, or the like.

Although only some exemplary embodiments and/or examples of this invention have been described in detail above, those skilled in the art will readily appreciate that many modifications are possible in the exemplary embodiments and/or examples without materially departing from the scope of the appended claims.

**Claims**

1. A sealing material comprising a sheet comprising layered clay minerals modified by ion-exchange of at least some of a first cation comprised in between the layers of swellable layered clay minerals with a second cation, **characterized in that** the first cation is one or more selected from Na$^+$ and Li$^+$, the second cation is one or more selected from K$^+$, Ba$^{2+}$ and Pb$^{2+}$, and **in that** the sheet is water-resistant.

2. The sealing material according to claim 1, wherein the sheet comprising the modified layered clay minerals has a thickness of 0.5 nm to 800 nm.

3. The sealing material according to claim 1 or 2, wherein the swellable layered clay mineral is a natural clay or a synthetic clay.

4. The sealing material according to claim 3, wherein the natural clay or the synthetic clay is mica, vermiculite, montmorillonite, iron montmorillonite, beidellite, saponite, hectorite, stevensite, or nontronite.

5. The sealing material according to claim 4, wherein the mica is fluorine mica.

6. The sealing material according to claim 5, wherein the fluorine mica is represented by the following formula:

$$\alpha MF \cdot \beta LF \cdot \gamma(aMgF_2 \cdot bMgO) \cdot \delta SiO_2$$

wherein M is an interlayer ion and represents one or more selected from K$^+$, Ba$^{2+}$ and Pb$^{2+}$, L is an interlayer ion and represents Na$^+$ or Li$^+$,

$$0 < \alpha \leqq 2,$$

$$0 \leqq \beta < 2,$$

$\alpha + \beta$ is 0.1 to 2,
$\gamma$ represents 2 to 3.5,
$\delta$ represents 3 to 4,
a and b represent 0 to 1 respectively and

$$a + b = 1.$$

7. The sealing material according to any one of claims 1 to 6, wherein a porosity of the sheet when compressed at a surface pressure of 34 MPa is 40% or less.

8. The sealing material according to any one of claims 1 to 7, wherein the sheet comprises an organic binder.

9. The sealing material according to claim 8, wherein the organic binder is one or more selected from acrylonitrile butadiene rubber, styrene butadiene rubber, polybutadiene rubber, silicone rubber, acrylic rubber, natural rubber, butyl rubber, chloroprene rubber, ethylene propylene rubber, fluorine rubber, urethane rubber, acrylic adhesive, and silicone adhesive.

10. The sealing material according to any one of claims 1 to 9, wherein a density of the sheet exceeds 1.6 g/cm$^3$.

**Patentansprüche**

1. Dichtungsmaterial, aufweisend eine Folie, welche geschichtete Tonmineralien umfasst, welche durch Ionenaustausch mindestens eines ersten Kations, das zwischen den Schichten der quellbaren geschichteten Tonmineralien eingeschlossen ist, mit einem zweiten Kation modifiziert sind, **dadurch gekennzeichnet, dass** das erste Kation eines oder mehrere ausgewählt ist aus Na$^+$ und Li$^+$, das zweite Kation eines oder mehrere ausgewählt ist aus K$^+$, Ba$^{2+}$ und Pb$^{2+}$, und dass die Folie wasserbeständig ist.

2. Dichtungsmaterial gemäss Anspruch 1, wobei die Folie, welche die modifizierten geschichteten Tonmineralien umfasst, eine Dicke von 0,5 nm bis 800 nm aufweist.

3. Dichtungsmaterial gemäss Anspruch 1 oder 2, wobei das quellbare geschichtete Tonmineral ein natürlicher Ton oder ein synthetischer Ton ist.

4. Dichtungsmaterial gemäss Anspruch 3, wobei der natürliche Ton oder der synthetische Ton Glimmer, Vermiculit, Montmorillonit, Eisenmontmorillonit, Beidellit, Saponit, Hectorit, Stevensit oder Nontronit ist.

5. Dichtungsmaterial gemäß Anspruch 4, wobei der Glimmer Fluor-Glimmer ist.

6. Dichtungsmaterial gemäss Anspruch 5, wobei der Fluor-Glimmer durch die folgende Formel dargestellt wird:

$$\alpha MF \cdot \beta LF \cdot \gamma (aMgF_2 \cdot bMgO) \cdot \delta SiO_2,$$

wobei M ein Zwischenschichtion ist und eines oder mehrere, ausgewählt aus K$^+$, Ba$^{2+}$ und Pb$^{2+}$, darstellt,
wobei L ein Zwischenschichtion ist und Na$^+$ oder Li$^+$ darstellt,
wobei $0 < \alpha \leqq 2$,
wobei $0 \leqq \beta < 2$,
wobei $\alpha + \beta$ 0,1 bis 2 ist,
wobei $\gamma$ 2 bis 3.5 darstellt,
wobei $\delta$ 3 bis 4 darstellt,
wobei a und b jeweils 0 bis 1 darstellen, und
wobei a+b=1.

7. Dichtungsmaterial gemäss einem der Ansprüche 1 bis 6, wobei eine Porosität der Folie bei einer Kompression mit einem Oberflächendruck von 34 MPa 40 % oder weniger beträgt.

8. Dichtungsmaterial gemäss einem der Ansprüche 1 bis 7, wobei die Folie ein organisches Bindemittel aufweist.

9. Dichtungsmaterial gemäss Anspruch 8, wobei das organische Bindemittel eines oder mehrere ausgewählt ist aus Acrylnitril-Butadien-Kautschuk, Styrol-Butadien-Kautschuk, Polybutadien-Kautschuk, Silikonkautschuk, Acrylkautschuk, Naturkautschuk, Butylkautschuk, Chloroprenkautschuk, Ethylen-Propylen-Kautschuk, Fluorkautschuk, Urethankautschuk, Acrylklebstoff und Silikonklebstoff.

10. Dichtungsmaterial gemäss einem der Ansprüche 1 bis 9, wobei die Dichte der Folie 1,6 g/cm$^3$ übersteigt.

**Revendications**

1. Matériau d'étanchéité comprenant une feuille comprenant des minéraux argileux stratifiés modifiés par échange d'ions d'au moins une partie d'un premier cation compris entre les couches de minéraux argileux stratifiés gonflables avec un second cation, **caractérisé en ce que** le premier cation est un ou plusieurs cations choisis parmi Na$^+$ et Li$^+$, le second cation est un ou plusieurs cations choisis parmi K$^+$, Ba$^{2+}$ et Pb$^{2+}$, et **en ce que** la feuille est résistante à l'eau.

2. Matériau d'étanchéité selon la revendication 1, dans lequel la feuille comprenant les minéraux argileux stratifiés modifiés a une épaisseur de 0,5 nm à 800 nm.

3. Matériau d'étanchéité selon la revendication 1 ou 2, dans lequel le minéral argileux stratifié gonflable est une argile naturelle ou une argile synthétique.

4. Matériau d'étanchéité selon la revendication 3, dans lequel l'argile naturelle ou l'argile synthétique est le mica, la vermiculite, la montmorillonite, la montmorillonite de fer, la beidellite, la saponite, l'hectorite, la stévensite ou la nontronite.

5. Matériau d'étanchéité selon la revendication 4, dans lequel le mica est du mica fluoré.

6. Matériau d'étanchéité selon la revendication 5, dans lequel le mica fluoré est représenté par la formule suivante :

$$\alpha MF \cdot \beta LF \cdot \gamma (aMgF_2 \cdot bMgO) \cdot \delta SiO_2$$

dans laquelle M est un ion intercouche et représente un ou plusieurs choisis parmi $K^+$, $Ba^{2+}$ et $Pb^{2+}$, L est un ion intercouche et représente $Na^+$ ou $Li^+$,

$$0 < \alpha \leqq 2,$$

$$0 \leqq \beta < 2,$$

$\alpha+\beta$ est 0,1 à 2,
$\gamma$ représente 2 à 3,5,
$\delta$ représente 3 à 4,
a et b représentent 0 à 1 respectivement et

$$a + b = 1.$$

7. Matériau d'étanchéité selon l'une quelconque des revendications 1 à 6, dans lequel une porosité de la feuille lorsqu'elle est comprimée à une pression de surface de 34 MPa est de 40 % ou moins.

8. Matériau d'étanchéité selon l'une quelconque des revendications 1 à 7, dans lequel la feuille comprend un liant organique.

9. Matériau d'étanchéité selon la revendication 8, dans lequel le liant organique est un ou plusieurs liant(s) choisi(s) parmi un caoutchouc acrylonitrile butadiène, un caoutchouc styrène butadiène, un caoutchouc de polybutadiène, un caoutchouc de silicone, un caoutchouc acrylique, un caoutchouc naturel, un caoutchouc de butyle, un caoutchouc de chloroprène, un caoutchouc d'éthylène propylène, un caoutchouc au fluor, un caoutchouc d'uréthane, un adhésif acrylique et un adhésif de silicone.

10. Matériau d'étanchéité selon l'une quelconque des revendications 1 à 9, dans lequel une densité de la feuille dépasse 1,6 g/cm $^3$.

FIG.1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3163562 B
- JP 3310619 B
- JP 5047490 B
- WO 2016125486 A1
- JP H05262514 A
- JP 2010255661 A
- JP 2000319013 A

- GB 2172883 A
- US 4877484 A
- JP 2011230504 A
- GB 2166127 A
- US 4707298 A
- US 2002058140 A1